# EUROPEAN PATENT APPLICATION

(11) **EP 2 615 789 A2**
(43) Date of publication of application: **17.07.2013**
(21) Application number: 12174588.9
(22) Date of filing: 02.07.2012
(51) Int. Cl.: H04L 29/06, G06F 9/445, H04W 4/00

(54) **Platform system based on network**

(30) Priority: 11.01.2012 KR 20120003286
(71) Applicant: MasangSoft Inc., Seoul 137-876 (KR)
(72) Inventor: Kang, Sam Seok, 138-891 Seoul (KR); Kwon, Dong Hyeok, 138-908 Seoul (KR); Jeong, Chang Jin, 463-824 Gyeonggi-Do (KR)
(74) Representative: Vossius & Partner

(57) **Abstract**

The present invention relates to a network-based platform system, which includes a framework providing server that provides a framework including specific functions specifically implemented and provided by an SDK (Software Development Kit) for developing a game, an individual or a company, such as a terminal device manufacturer, a store server that distributes a game to common users, and a client terminal device that develops a game by downloading the SDK or the framework and registers the developed game on the store server. The present invention makes it possible to reduce the development time and the development cost by allowing a programmer to use and implement functions taking a long time to be developed from a framework provided from an individual or a company, such as a terminal device manufacturer, when developing an application (game).

## Description

### BACKGROUND

### 1. Field of the Invention

The present invention relates to an application development system for a smartphone, particularly a network-based platform system.

### 2. Discussion of Related Art

Recently, the smartphone market has rapidly increased around a smartphone based on iOS (i operating system) developed by Apple and a smartphone based on an android OS developed by Google.

The present smartphone market could be built because as Apple and Google have made the 'source code' of the smartphone platform public, it is possible to not only provide a development environment that makes it possible to easily develop applications, but easily install and distribute the applications, unlike the existing market.

Therefore, developers are made to be able to easily develop applications for mobile phones by expanding, replacing, or reusing the public 'source code'.

However, even though it is easy to develop application programs due to the public 'source code', it is necessary to additionally develop the functions of applications, such that it takes a long time to develop applications, and accordingly, it may miss the release time of the application.

### SUMMARY OF THE INVENTION

The present invention has been made in an effort to solve the problems and it is an object to provide a network-based platform system that makes it possible to easily develop a application for a smartphone and reduce the development period, by making in advance a program code for performing a specific function of an application (game) for a smartphone and providing developers with the program code.

In order to achieve the objects of the present invention, a network-based platform system may include: an application framework for a smartphone; a framework providing server that provides an UI screen recognition codes of specific functions that are loaded on an application for a smartphone which is developed on the basis of the application framework; a store server that distributes the application; a client terminal device that receives the application framework for a smartphone from the framework providing server and creates an application for a smartphone in response to a key input from a developer, loads the specific functions implemented in the application framework for a smartphone on the application for a smartphone, and registers the created application for a smartphone on the store server in response to a key input.

Further, in order to achieve the objects of the present invention, a network-based platform system may include: an application framework for a smartphone; a framework providing server that edits and provides UI screens for specific functions loaded on an application for a smartphone; a store server that distributes the application for a smartphone; a user terminal device where an application for a smartphone downloaded from the store server is installed and executed, and that transmits the information of a key input for specific function to the framework providing server when the key input is sensed while the application for a smartphone is executed such that the UI screen for the corresponding function provided from the framework providing server is displayed in a web page type; and a charging server that imposes charge on distribution of the application for a smartphone together with the store server and distributes the profits to a developer on the basis of the charging information and the distribution of the application.

Further, in order to achieve the objects of the present invention, a network-based platform system may include: an application framework for a smartphone; an UI screen recognition codes for specific functions that are loaded on an application for a smartphone; a framework providing server that edits and provides UI screens for specific functions loaded on an application for a smartphone; a store server that distributes the application for a smartphone; a client terminal device that receives the application framework for a smartphone from the framework providing server and creates an application for a smartphone in response to a key input from a developer, and registers the created application for a smartphone on the store server in response to a key input; a user terminal device where an application for a smartphone downloaded from the store server is installed and executed, and that transmits the information of a key input for specific function to the framework providing server when the key input is sensed while the application for a smartphone is executed such that the UI screen for the corresponding function provided from the framework providing server is displayed in a web page type; and a charging server that imposes charge on distribution of the application for a smartphone together with the store server and distributes the profits to a developer on the basis of the charging information and the distribution of the application.

The client terminal device may search and select the UI screens for the specific functions loaded on the application for a smartphone from the framework providing server in response to a key input from the developer and may load the recognition codes of the selected UI screens on the application for a smartphone.

The client terminal device is a laptop computer, a notebook computer, an UMPC (Ultra Mobile PC), or a smartphone.

The application for a smartphone includes an application program, a library including recognition codes for calling a web browser and performing the specific functions and recognition codes of the UI screens for the specific functions, and a web browser that is activated by the library.

The library activates the web browser first, transmits the recognition code and an authentication key corresponding to the key input for a specific function to the framework providing server, and switches the application picture with the web browser in response to a key input from a user.

The key input information transmitted from the user terminal device to the framework providing server is the recognition code of the specific function corresponding to the key input sensed while the application for a smartphone is performed, the recognition code of the UI screen and terminal device information for providing the specific function.

The framework providing server may recognize the recognition code of a specific function and the recognition code of an UI screen, which are transmitted from the user terminal device, and may edit the UI screen for the specific function to be suitable for the display of the user terminal device in a web page type in accordance with the recognition result and provide the UI screen to the user terminal device.

The framework providing server, the store server, the charging server, and the user terminal device are connected with each other through wire/wireless communication networks.

A network-based platform system according to embodiments of the present invention makes it possible to reduce the development time and the development cost by allowing a programmer to borrow and implement functions taking a long development time from a framework provided from an individual or a company, such as a terminal device manufacturer, when developing an application (game).

Further, since the network-based platform system according to embodiments of the present invention borrows and implements functions taking a long development time from a framework provided from an individual or a company, it is possible to remarkably reduce compile errors of an application (game).

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:

Fig. 1 is a diagram showing the configuration of a system for developing a game as an example of the present invention;

Fig. 2 is a diagram showing the structure of a game architecture developed in Fig. 1;

Fig. 3 is a diagram showing the configuration of a system for playing a game as an example of the present invention;

Fig. 4 is a diagram showing an example of a payment picture in Fig. 3;

Fig. 5 is a diagram showing an example of a buddy picture in Fig. 3;

Fig. 6 is a diagram showing an ex ample of a game rank picture in Fig. 3; and

Fig. 7 is a diagram showing an example of an item search picture in Fig. 3.

### DETAILED DESCRIPTION OF EXEMPLARY EMBODIMENTS

The following embodiments are made by combining the components and features of the present invention in predetermined ways. The components or features may be considered selectable, if not specifically stated. The components or features may be implemented without being combined with other components or features. Further, embodiments of the present invention may be implemented by combining some of the components and/or features. The order of the operations described in the embodiments of the present invention may be changed. Some of the configurations or features of any embodiment may be included in another embodiment and may be replaced by corresponding configurations or feature of another embodiment.

The embodiments of the present invention may be implemented in various ways. For example, the embodiments of the present invention may be implemented by hardware, firmware, software, or combination of them.

When being implemented by hardware, methods according to the embodiments of the present invention may be implemented by one or more ASICs (application specific integrated circuits), DSPs (digital signal processors), DSPDs (digital signal processing devices), PLDs (programmable logic devices), FPGAs (field programmable gate arrays), a process, a controller, a microcontroller, and a microprocessor.

When being implemented by firmware or software, the methods according to the embodiments of the present invention may be implemented by a module, a process, or a function that performs the functions and operations described above. The software code may be stored in a memory unit and executed by a processor. The memory unit is disposed inside or outside the processor and can communicate data with the processor through various means known in the related art.

Throughout the specification, when it is described that an element is connected with another element, the element may be directly connected with the other element or electrically connected with the other element through a third element. In addition, unless explicitly described to the contrary, the word "comprise" and variations, such as "comprises" or "comprising", will be understood to imply the inclusion of stated elements but not the exclusion of any other elements.

In addition, the term "module" described in the specification means a unit for processing specific function and operation, and can be implemented by hardware or software and combinations thereof.

Specific terms used in the following description are provided for helping understand the present invention and may be changed in a range without departing from the scope of the present invention.

The detailed description of technologies known to those skilled in the art is not provided in the embodiments to make the scope and spirit of the present invention clear. Although the present invention can be applied to a smartphone platform provided by Apple, Google, Microsoft, Samsung and the like, the embodiments of the present invention describes when the present invention is applied to android-based platform by Google and an application based on the android platform is limited to a 'game'.

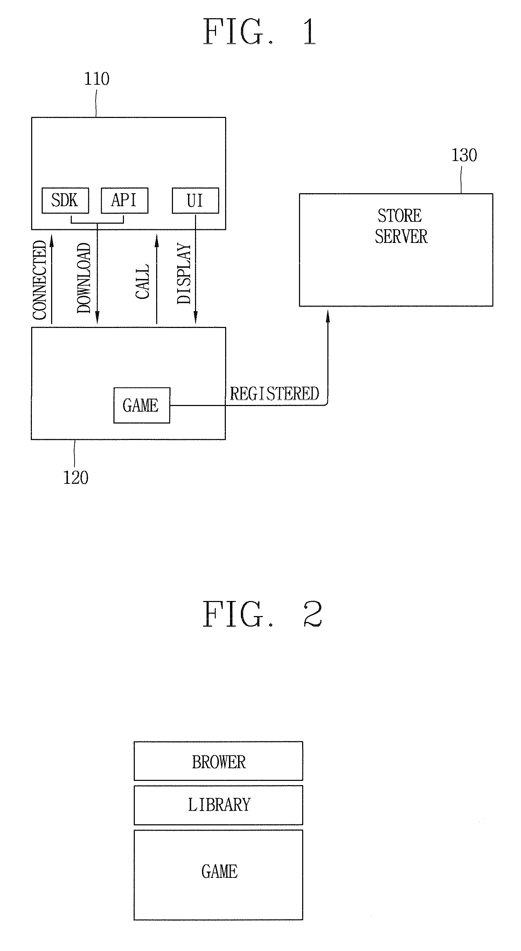

A system for making a game according to an embodiment of the present invention, as shown in Fig. 1, includes a framework providing server 110 that provides a framework including specific functions specifically implemented and provided by an SDK (Software Development Kit) for developing a game, an individual or a company, such as a terminal device manufacturer, a store server 130 that distributes a game to common users, and a client terminal device 120 that develops a game by downloading the SDK or the framework and registers the game developed on the store server 130.

Wire/wireless communication networks are used for data communication between the framework providing server 110, the store server 130, and the client terminal device 120.

The operation and operational effect of an embodiment of the present invention having the configuration are described in detail hereafter.

The framework providing server 110 provides the client terminal device 120 with an android-based framework and the SDK. The android is a software platform including an operating system for a mobile device, a middle ware, and a key application. Further, the android SDK (Software Development Kit) provides a tool and an API (Application Programming Interface) that make it possible to develop desired applications by using the JAVA programming language.

The framework provided by an embodiment of the present invention includes functions, such as searching/inviting a friend, competing with a game, ranking according to joining a game, partially charging a game item, and in-game advertising, and supporting a separate UI (User Interface) to be provided in an OpenAPI type, and may be made and provided by an individual or a company, such as a terminal device manufacturer.

The OpenAPI (Open Application Program Interface) is an application program interface allowing anyone to select and use an open service structure, using a standardized interface, which is one of the features of the next generation internet environment.

Therefore, the OpenAPI provider can increases sharing and using data by opening the interface to the outside and the application developer does not need to specifically construct a database, such that it is possible to reduce time and cost.

The client terminal device 120 is a device for receiving a framework and developing a game and may be a notebook computer, a personal computer, a desktop, a PDA, or a smartphone.

The client terminal device 120 receives the SDK and the framework from the framework providing server 110 by a key input of the developer and the developer develops a game, using the SDK. The developer of the client terminal device 120 can be given an authentication key for the game to develop in advance from a developer site. It is necessary to insert a recognition code for a specific function implemented in the framework provided from the framework providing server 110 into the game program in order to load specific functions, such as searching/inviting a friend, competing with a game, ranking according to joining a game, partially charging a game item, and in-game advertising in the game developed by the client terminal device 120.

However, the developer may develop the functions by himself/herself in order not to use the functions provided by the framework. In this case, the period for developing the functions necessarily increases.

Further, the developer selects a desired UI screen after searching UI screens for providing the specific functions loaded in the game program by connecting with the framework providing server 110 and loads only the recognition code for the UI screen in the game program.

Accordingly, when the user sets a specific function, such as searching/inviting a friend, competing with a game, searching rank, and partially charging a game item while playing the game, the user terminal device is allowed to the recognition code of the specific function loaded in the game the recognition code of the UI screen for providing the specific function to the framework providing server 110 and receive the UI screen of a corresponding function in a webpage type from the framework providing server 110.

Further, since only the recognition code of the UI screen for providing a specific function is loaded in the game program, it is possible to receive the UI screen of a corresponding function without a problem even if the UI screen of a specific function is changed in the framework providing server 110.

Further, when the game is developed and specific necessary functions are completely implemented, the game is finally completed by loading a mobile web browser in a launch program type. A game architecture developed by the process described above, as shown in Fig. 2, is loaded with a game program, a library, and a mobile web browser.

The mobile web browser follows a data exchange standard, for example, a standard, such as PUSH/Rest and HTML5, between a server and a client, which is prescribed by W3C (World Wide Web Consortium), and an android web view may be exemplified.

The library is implemented to perform a function of activating a web browser and a function of storing the recognition code values and the recognition key values of specific functions. Therefore, the library is implemented to activate first the mobile web browser when a key input for a specific function is sensed while the game is played and perform a function of transmitting the recognition code and the recognition key corresponding to the a key input for the specific function to a server (the framework providing server in an embodiment of the present invention).

When the game is completely developed by the process described above, the developer provides the game to common users by connecting to the store server 130 with the client terminal device 120 and then registering the game. The developer information is requested to register the game, which is required for right distribution of the game and distribution of the profits due to the distribution of the game. The developer information includes the business registry number, the phone number of the game developer, the account number, and the authentication key of the game. Although it is described above that the authentication key of the game is issued in advance, the authentication key of the game may be issued when the game that has been completely developed is registered.

Therefore, as the game is developed and registered on the store server 130 by the process described above, common users can download and enjoy the game from the sore server 130, and the operations for playing the game are described hereafter.

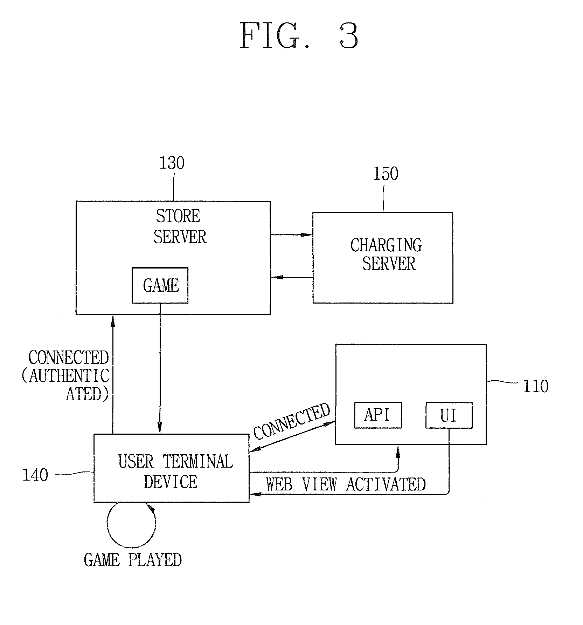

A system for making a game in an embodiment of the present invention, as shown in Fig. 3, includes a framework providing server 110 that provides a framework including specific functions specifically implemented and provided by an individual or a terminal device manufacturer and UI (user Interface) screens for the specific functions, a charging server 150, a store server 130 that distributes a game to common users and imposes charge on distribution of the game together with the charging server 150, and a user terminal device 140 that downloads and plays a game from the store server 130 and performs functions of searching/inviting a friend, playing competition game, searching game rank, and taking a game item while the game is played.

The framework providing server 110, the store server 130, the charging server 150, and the user terminal device 140 are connected with each other through wire/wireless communication networks.

The operation and operational effect of the system for playing a game of an embodiment of the present invention having the configuration are described in detail hereafter.

A common user connects with the store server 130 and performs user authentication with the user terminal device 140 and downloads a desired game by searching games in order to enjoy a game.

The store server 130 charges together with the charging server 150 when the game is downloaded.

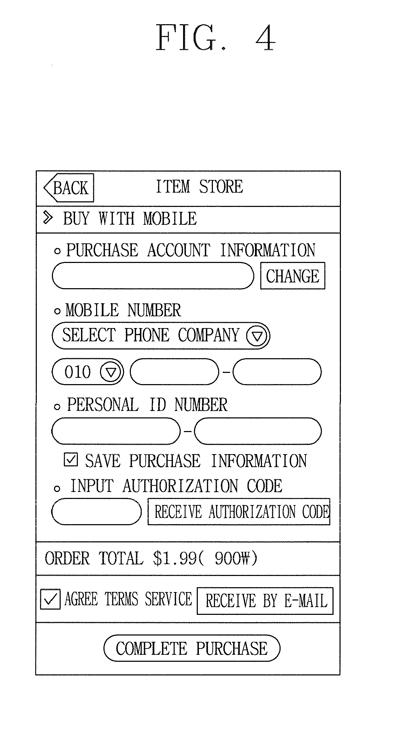

The user terminal device 140 is an android-based smartphone and the charge may be by a credit card or added to the charge of the phone, in which the store server 130 operating with the charging server 130 provides a payment screen to the user terminal device 140 such that the user can select the payment types. The payment screen may be implemented to input a user authentication number, such as the payment account information, the mobile phone information, the social security number, or the certificate, as shown in Fig. 4.

Thereafter, when the game is played, the user terminal device 140 is connected to the framework providing server 110 and plays the corresponding game with reference to the framework based on the android OS.

When a buddy function is set to invite/search a friend while the game is played, the user terminal device 140 activates a web view as a mobile web browser in a launch browser type and transmits the corresponding UI function and the terminal device information to the framework providing server 110.

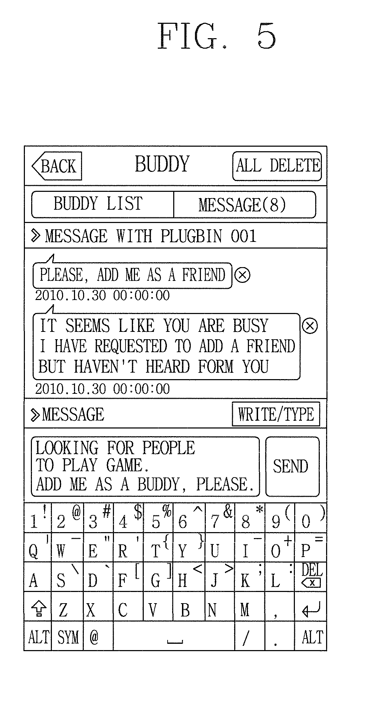

Accordingly, the framework providing server 110 converts the buddy picture as shown in Fig. 5 to be suitable for the user terminal device 140 with reference to the terminal device information and the UI function and displays the buddy picture on the user terminal device 140.

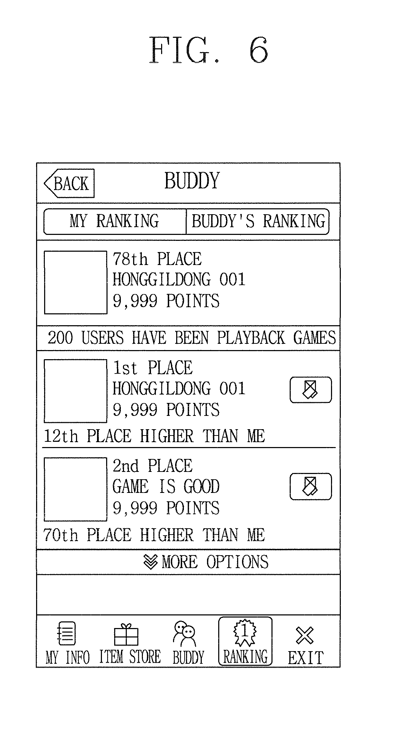

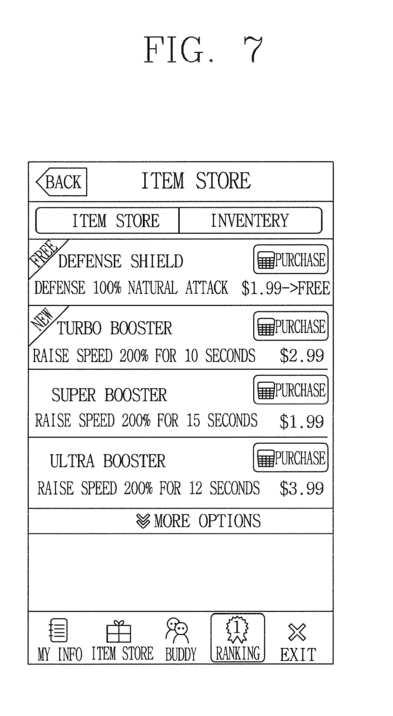

Therefore, the user enjoys the game while searching/inviting a friend on the buddy picture of Fig. 5. Further, the user can search the rank of the game by receiving a ranking picture shown in Fig. 6 or search items for the games by receiving an item picture shown in Fig. 7 in the same way as the display of the buddy picture of Fig. 5, and purchase items through the payment picture of Fig. 4.

Thereafter, when the game ends, the user terminal device 140 is disconnected from the framework providing server 110.

Further, the framework providing server 110 can provide the UI screens for a specific function to the user terminal device 140 without a problem at anytime even if the UI screen of the specific function is changed, by receiving only the recognition code of the specific function and the recognition code of the UI screen for providing the specific function from the user terminal device 140 and providing the UI screen of the specific function in a web page type.

Although an embodiment of the present invention is described above, it should be understood that the present invention may be modified in various ways by those skilled in the art without departing from the spirit and scope of the present invention.

## Claims

1. A network-based platform system comprising:
an application framework for a smartphone;
a framework providing server that provides UI screen recognition codes of specific functions that are loaded on an application for a smartphone which is developed on the basis of the application framework;
a store server that distributes the application;
a client terminal device that receives the application framework for a smartphone from the framework providing server and creates an application for a smartphone in response to a key input from a developer, loads the specific functions implemented in the application framework for a smartphone on the application for a smartphone, and registers the created application for a smartphone on the store server in response to a key input.

2. A network-based platform system comprising:
an application framework for a smartphone;
a framework providing server that edits and provides UI screens for specific functions loaded on an application for a smartphone;
a store server that distributes the application for a smartphone;
a user terminal device where an application for a smartphone downloaded from the store server is installed and executed, and that transmits the information of a key input for specific function to the framework providing server when the key input is sensed while the application for a smartphone is executed such that the UI screen for the corresponding function provided from the framework providing server is displayed in a web page type; and
a charging server that imposes charge on distribution of the application for a smartphone together with the store server and distributes the profits to a developer on the basis of the charging information and the distribution of the application.

3. A network-based platform system comprising:
an application framework for a smartphone;
UI screen recognition codes for specific functions that are loaded on an application for a smartphone;
a framework providing server that edits and provides UI screens for specific functions loaded on an application for a smartphone;
a store server that distributes the application for a smartphone;
a client terminal device that receives the application framework for a smartphone from the framework providing server and creates an application for a smartphone in response to a key input from a developer, and registers the created application for a smartphone on the store server in response to a key input;
a user terminal device where an application for a smartphone downloaded from the store server is installed and executed, and that transmits the information of a key input for specific function to the framework providing server when the key input is sensed while the application for a smartphone is executed such that the UI screen for the corresponding function provided from the framework providing server is displayed in a web page type; and
a charging server that imposes charge on distribution of the application for a smartphone together with the store server and distributes the profits to a developer on the basis of the charging information and the distribution of the application.

4. The network-based platform system according to claim 1 or 3, wherein the client terminal device searches and selects the UI screens for the specific functions loaded on the application for a smartphone from the framework providing server in response to a key input from the developer and loads the recognition codes of the selected UI screens on the application for a smartphone.

5. The network-based platform system according to any one of claims 1 to 3, wherein the application for a smartphone includes an application program, a library including recognition codes for calling a web browser and performing the specific functions and recognition codes of the UI screens for the specific functions, and a web browser that is activated by the library.

6. The network-based platform system according to claim 5, wherein the application program is an android-based game.

7. The network-based platform system according to claim 5, wherein the library activates the web browser first and transmits the recognition code and an authentication key corresponding to the key input for a specific function to the framework providing server.

8. The network-based platform system according to claim 7, wherein the library switches the application picture with the web browser in response to a key input from a user.

9. The network-based platform system according to claim 2 or 3, wherein the key input information is the recognition code of the specific function corresponding to the key input sensed while the application for a smartphone is performed, the recognition code of the UI screen and terminal device information for providing the specific function.

10. The network-based platform system according to claim 2 or 3, wherein the framework providing server recognizes the recognition code of a specific function and the recognition code of an UI screen, which are transmitted from the user terminal device, and edits the UI screen for the specific function to be suitable for the display of the user terminal device in a web page type in accordance with the recognition result and provides the UI screen to the user terminal device.
